(19) Europäisches Patentamt / European Patent Office / Office européen des brevets

(11) EP 2 739 058 A2

(12) EUROPEAN PATENT APPLICATION

(43) Date of publication:
04.06.2014 Bulletin 2014/23

(51) Int Cl.:
H04N 19/186 (2014.01)  H04N 19/159 (2014.01)
H04N 19/11 (2014.01)  H04N 19/59 (2014.01)
H04N 19/176 (2014.01)  H04N 19/147 (2014.01)
H04N 19/61 (2014.01)  H04N 19/194 (2014.01)
H04N 19/593 (2014.01)

(21) Application number: 13195109.7

(22) Date of filing: 29.11.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 30.11.2012 JP 2012263126

(71) Applicant: CANON KABUSHIKI KAISHA
Ohta-ku
Tokyo 146-8501 (JP)

(72) Inventor: Hattori, Hideaki
Ohta-ku, Tokyo (JP)

(74) Representative: Walker, Philip Martin
Canon Europe Ltd
European Patent Department
3 The Square
Stockley Park
Uxbridge, Middlesex UB11 1ET (GB)

(54) **Image coding apparatus, image coding method, and program**

(57) An image coding apparatus includes an acquisition means configured to acquire a plurality of first values indicating an evaluation of each of a plurality of chrominance prediction modes which can be selected in coding of a chrominance component of a block to be coded and a plurality of second values indicating an evaluation of each of a plurality of luminance prediction modes which can be selected in coding of a luminance component of the block to be coded, and a determination means (306) configured to determine a luminance prediction mode to be used for the coding of the luminance component out of the plurality of luminance prediction modes, based on the plurality of first values and the plurality of second values acquired by the acquisition means.

**FIG.1**

**Description**

BACKGROUND OF THE INVENTION

Field of the Invention

The present invention relates to an image coding apparatus and method, an image coding format, and a program.

Description of the Related Art

As a coding format for data compression of a moving image, there is a commonly-known standard H.264/MPEG-4 AVC (hereinafter H.264).

In recent years, a group of video coding experts called Joint Collaborative Team on Video Coding (JCT-VC) has been established by ISO/IEC (International Organization for Standardization/International Electrotechnical Commission) and ITU-T (International Telecommunication Union Telecommunication Standardization Sector) to pursue an international standardization of a coding format which can realize enhanced data compression. High Efficiency Video Coding (HEVC) is a coding format which is being established as a successor to H.264. (Literature 1: JCT-VC text JCTVC-I1003_d4.doc Internet<http://phenix.int-evry.fr/jct/doc_end_user/documen ts/9_Geneva/wgll/>).

According to chapter 8.4 of Literature 1, in order to enhance the coding efficiency, HEVC uses intra picture prediction (hereinafter referred to as intra prediction) which uses correlation between pixels within the screen in performing intra picture prediction and encodes a prediction residual. The intra prediction includes luminance (luma) intra prediction, which is intra prediction of a luminance component, and chrominance (chroma) intra prediction, which is intra prediction of each of chrominance components (Cb component and Cr component).

According to HEVC, the intra prediction is performed in block units. The size of a prediction block (prediction block size) can be selected from five sizes: 64 x 64 pixels, 32 x 32 pixels, 16 x 16 pixels, 8 x 8 pixels, and 4 x 4 pixels. The horizontal and vertical size of a block of 64 x 64 pixels is 64 pixels in the horizontal direction and 64 pixels in the vertical direction. In the embodiments of the present invention, a block of 64 x 64 pixels is referred to as "64 x 64 pixels". Blocks of other sizes are also expressed in a similar manner.

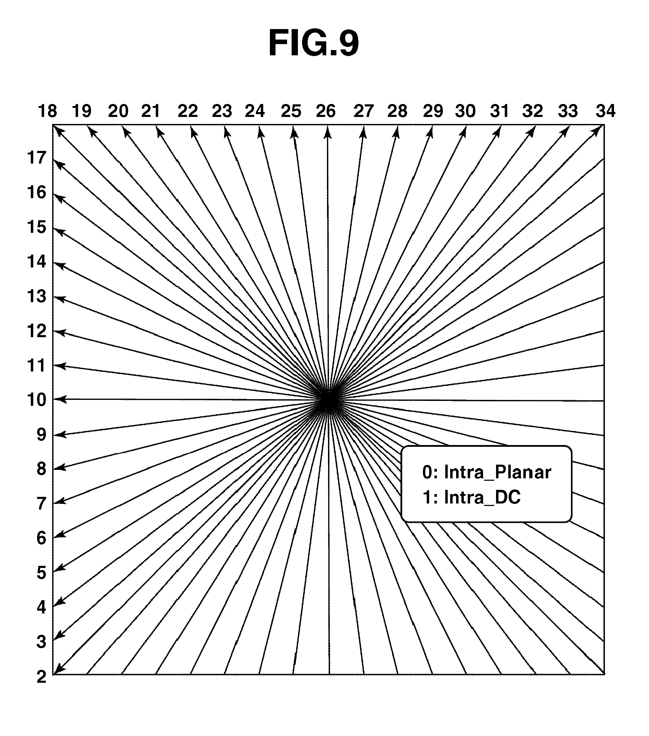

Further, according to chapter 8.4.1 of Literature 1, the HEVC standard sets a total of 35 modes as intra prediction modes for a luminance component of an image. The 35 modes (hereinafter referred to as luminance intra prediction modes) are defined for each prediction block size. These modes are illustrated in Fig. 9. Furthermore, according to the HEVC standard, unless an optimum luminance intra prediction mode is selected from the 35 modes before the intra prediction coding is performed, prediction error will be increased and the coding efficiency will be reduced.

Further, according to the HEVC standard, the number of the intra prediction modes defined for each of the chrominance components (the Cb and Cr components) of an image is smaller compared to the 35 luminance intra prediction modes. More precisely, according to Table 8-3, chapter 8.4.2 of Literature 1, there are six modes as the intra prediction modes defined for each of the chrominance components (hereinafter referred to as chrominance intra prediction modes). These modes, which are based on the luminance intra prediction mode, are planar mode, DC mode, horizontal mode, vertical mode, and luminance reference mode, and mode 34 (see Fig. 9).

Further, the coding efficiency can be enhanced by using a mode called "luminance reference mode". The luminance reference mode is a mode by which the luminance intra prediction mode is used as-is for the chrominance intra prediction. In order to enhance the coding efficiency by using the luminance reference mode, an optimum mode for each of the chrominance components needs to be selected as the luminance intra prediction mode.

As is discussed in Japanese Patent Application Laid-Open No. 2010-251952, conventionally, as a method for determining the luminance intra prediction mode and the chrominance intra prediction mode, there is a method that determines the luminance intra prediction mode considering only the luminance component. According to the method discussed in Japanese Patent Application Laid-Open No. 2010-251952, the luminance intra prediction mode is determined considering only the luminance component and not considering the chrominance component regarding each of a plurality of prediction blocks in a coding block.

However, if the luminance intra prediction mode is determined considering only the luminance component, the coding efficiency of the chrominance component will be reduced. In other words, if only the luminance component is considered when the luminance intra prediction mode is determined, compared to a case where the luminance intra prediction mode is determined in consideration of the chrominance components, the coding efficiency of the chrominance component will be reduced when the chrominance component intra prediction using the luminance reference mode of HEVC is performed. Further, this reduction in the coding efficiency of the chrominance components becomes especially significant when a sample number of a pixel of the chrominance components (hereinafter referred to as a chrominance sample number) of the input image is equal to or greater than a sample number of a pixel of the luminance component (hereinafter referred to as a luminance sample number). In other words, the reduction in the coding efficiency of the chrominance components becomes especially significant when the sampling ratio of the components is 4:2:2 (the chrominance sample number is equal to the luminance sample number) or 4:4:4 (the chrominance sample number is greater than the luminance sample number). The sampling ratios 4:2:2 and 4:4:4 are based on an input image format commonly used for expressing a digital component image. The sampling ratio indicates the sampling frequency of the luminance component (Y) and the chrominance components (Cb and Cr).

SUMMARY OF THE INVENTION

The present invention is directed to determining a luminance intra prediction mode considering coding efficiency of a chrominance component.

The present invention in its first aspect provides an image coding apparatus as specified in claims 1 to 10. In a further aspect there is provided a method of image coding as set out in claims 11 and 12. In another aspect there is provided a computer program according to claim 13.

According to another aspect of the present invention, the luminance intra prediction mode can be determined considering a chrominance component and, accordingly, compared to a case where only the luminance component is considered when the luminance intra prediction mode is determined, the coding efficiency of the chrominance component can be enhanced and the amount of coding can be reduced.

Further features and aspects of the present invention will become apparent from the following detailed description of embodiments with reference to the attached drawings.

BRIEF DESCRIPTION OF THE DRAWINGS

The accompanying drawings, which are incorporated in and constitute a part of the specification, illustrate embodiments, features, and aspects of the invention and, together with the description, serve to explain the principles of the invention.

Fig. 1 illustrates a configuration of an image coding apparatus according to a first and a second embodiment of the present invention.

Figs. 2A, 2B, and 2C illustrate a coding block, a prediction block, and a reference sample according to the first embodiment.

Fig. 3 illustrates a configuration of a luminance chrominance integrated prediction mode determination unit according to the first embodiment.

Fig. 4 is a flowchart illustrating determination processing of an intra prediction mode according to the first embodiment.

Fig. 5 is a timing chart illustrating intra prediction mode search processing of the luminance chrominance integrated prediction mode determination unit according to the first embodiment.

Figs. 6A and 6B illustrate examples of the intra prediction mode according to the first embodiment.

Fig. 7 illustrates a configuration of the luminance chrominance integrated prediction mode determination unit according to the second embodiment.

Fig. 8 illustrates a configuration of the image coding apparatus according to a third embodiment of the present invention.

Fig. 9 illustrates an intra prediction mode in HEVC.

Fig. 10 is a block diagram illustrating a hardware configuration example of a computer applicable to a coding method conversion apparatus according to the present invention.

DESCRIPTION OF THE EMBODIMENTS

Various embodiments, features, and aspects of the invention will be described in detail below with reference to the drawings.

According to a first embodiment, one or more input images are divided into coding blocks of 32 x 32 pixels and coded in units of the coding blocks. According to the present embodiment, the size of the coding block is 32 x 32 pixels. Further, according to the present embodiment, the coding is performed based on intra picture prediction (hereinafter referred to as intra prediction) and only I slice is the target of the coding. In other words, P slice and B slice, which are coded by inter picture prediction (hereinafter referred to as inter prediction), are not considered as the coding targets. The inter prediction uses a motion vector in the prediction.

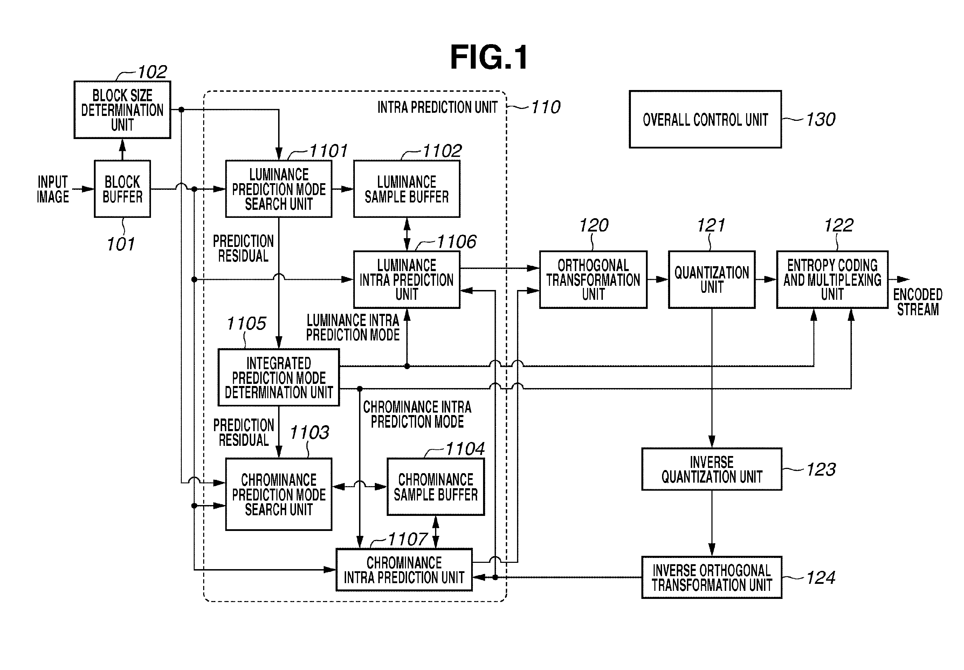

First, an operation of an image coding apparatus according to the first embodiment of the present invention will be described with reference to Fig. 1.

An overall control unit 130 controls each of the processing units in the image coding apparatus and transmits parameters between the processing units. In Fig. 1, connection between the overall control unit 130 and each of the processing units in the image coding apparatus is not illustrated. Further, the overall control unit 130 can control each of the processing units in the image coding apparatus and reading/writing of parameters between the processing units via a parameter signal line or a register bus. Further, according to the present embodiment, although the overall control unit 130 in Fig. 1 is arranged in the image coding apparatus, the overall control unit 130 is not necessarily included in the image coding apparatus. In other words, the overall control unit 130 can be arranged out of the image coding apparatus and control the processing units in the image coding apparatus and the reading/writing of parameters between the processing units via a parameter signal line or a register bus.

A block buffer 101 stores one or a plurality of coding blocks. One coding block includes a pixel group of luminance components and a pixel group of chrominance components. The luminance component is referred to as a luminance sample and the chrominance component is referred to as a chrominance sample.

A block size setting unit 102 reads a block to be coded (a coding target) for each coding block from the one or a plurality of coding blocks stored in the block buffer 101. Then, the block size setting unit 102 sets the prediction block size as well as a size of the transformation block (transformation block size) determined in advance for the block to be coded. According to the present embodiment, the prediction block size of the luminance component is 16 x 16 pixels and the prediction block size of each of the chrominance components is 8 x 8 pixels. The chrominance components are a Cb component and a Cr component. The chrominance components described in the embodiments of the present invention are the Cb and Cr components.

An intra prediction unit 110 reads a block to be coded stored in the block buffer 101 and obtains the luminance sample and the chrominance sample of the block to be coded. Further, the intra prediction unit 110 obtains the prediction block size of the luminance component and the prediction block size of the chrominance components which have been set by the block size setting unit 102. Then, the intra prediction unit 110 searches for an intra prediction mode of the luminance components (luminance intra prediction mode) and an intra prediction mode of the chrominance components (chrominance intra prediction mode) from candidate luminance intra prediction modes and candidate chrominance intra prediction modes.

In the following descriptions, the candidate luminance intra prediction mode and the candidate chrominance intra prediction mode are referred to as a candidate luminance prediction mode and a candidate chrominance prediction mode, respectively. According to the present embodiment, when the coding is performed according to HEVC, the 35 modes illustrated in Fig. 9 are defined as the candidate luminance prediction modes. Further, six modes are defined as the candidate chrominance prediction modes. The six modes are planar mode, DC mode, horizontal mode, vertical mode, luminance reference mode, and mode 34 (see Fig. 9) and are based on the luminance intra prediction mode.

If the determined luminance intra prediction mode is any one of the planar mode, DC mode, horizontal mode, and vertical mode, the chrominance intra prediction mode can be selected from the planar mode, DC mode, horizontal mode, vertical mode, and the luminance reference mode. Further, if the determined luminance intra prediction mode is a mode other than the planar mode, DC mode, horizontal mode, and vertical mode, the chrominance intra prediction mode can be selected from the planar mode, DC mode, horizontal mode, vertical mode, and mode 34. In other words, if any one of the planar mode, DC mode, horizontal mode, and vertical mode is used as the chrominance intra prediction mode, the coding efficiency of the chrominance intra prediction does not depend on the luminance intra prediction mode.

Next, the operation of the units in the intra prediction unit 110 will be described.

A luminance prediction mode search unit 1101 (a first intra prediction unit) generates a reference block of the luminance components (reference luminance block) corresponding to each of the candidate luminance prediction modes and calculates a prediction residual block of the luminance components (luminance prediction residual block). Similarly, a chrominance prediction mode search unit 1103 (a second intra prediction unit) generates a reference block of the chrominance components (reference chrominance block) corresponding to each of the candidate chrominance prediction modes and calculates a prediction residual block of the chrominance components (chrominance prediction residual block). An algorithm used for searching for the intra prediction mode to be used for the coding from the candidate prediction modes, in other words, an algorithm used for searching for a luminance intra prediction mode from the candidate luminance prediction modes and searching for a chrominance intra prediction mode from the candidate chrominance prediction modes will be described below.

First, the luminance prediction mode search unit 1101 reads a group of reference pixels of luminance components (referred to as a reference luminance sample) necessary in the intra prediction. The luminance prediction mode search unit 1101 reads the reference luminance sample from a luminance sample buffer 1102.

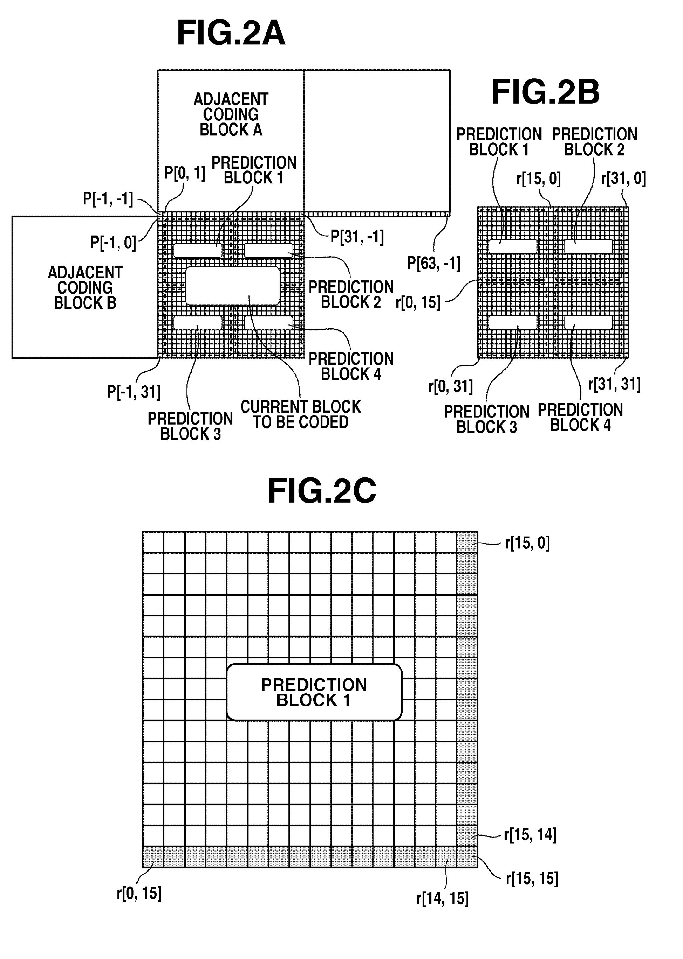

Fig. 2A illustrates the reference luminance sample stored in the luminance sample buffer 1102. The reference luminance sample is necessary in the intra prediction and is based on a reconfigured luminance block formed by luminance pixel groups reconfigured by a luminance intra prediction unit 1106. The processing of the luminance intra prediction unit 1106 will be described below.

If the coding block size is 32 x 32 pixels as is the present embodiment, groups of predetermined luminance pixels in the coding blocks adjacent to the block to be coded will be used as the reference luminance samples. The shaded portions in Fig. 2A illustrate the groups of the luminance pixels.

- 64 pixels at the bottom end portion of the coding blocks which are adjacent to the upper side and the upper right side of the block to be coded (p[0, -1] to p[63, -1])
- 32 pixels at the right end portion of the coding block which is adjacent to the left side of the block to be coded (p[-1, 0] to p[-1, 31])
- 1 pixel at the upper left corner of the block to be coded (p[-1, -1])

If the prediction block size of the block to be coded is 16 x 16 pixels as is the present embodiment, groups of predetermined luminance pixels in the same coding block will be required as the reference luminance samples. The shaded portions in Fig. 2B illustrate the groups of the luminance pixels.

- 15 pixels at the right end portion of each prediction block (r[15, 0] to r[15, 14], r[31, 0] to r[31, 14], r[15, 16] to r[15, 30], r[31, 16] to r[31, 30])
- 15 pixels at the bottom end portion of each prediction block (r[0, 15] to r[14, 15], r[16, 15] to r[30, 15], r[0, 31] to r[14, 31], r[16, 31] to r[30, 31])
- 1 pixel at the lower right corner of each prediction block (r[15, 15], r[31, 15], r[15, 31], r[31, 31])

As described above, the luminance prediction mode search unit 1101 reads the groups of predetermined luminance pixels in the adjacent coding blocks (Fig. 2A) and the groups of predetermined luminance pixels in the block to be coded (Fig. 2B) as reference luminance samples from the luminance sample buffer 1102. Although Figs. 2A and 2B illustrate only the reference luminance samples necessary for the intra prediction of the luminance component, reference pixel groups of chrominance components (reference chrominance samples) necessary for the intra prediction of each chrominance component are designated in a similar manner. In other words, the chrominance prediction mode search unit 1103 reads the reference chrominance samples from a chrominance sample buffer 1104.

Next, the algorithm which is used when the luminance prediction mode search unit 1101 searches for the luminance intra prediction mode used for the coding from the candidate luminance prediction modes and the chrominance prediction mode search unit 1103 searches for the chrominance intra prediction mode used for the coding from the candidate chrominance prediction modes will be described.

The luminance prediction mode search unit 1101 reads the reference luminance sample used by a mode to be searched (luminance search target mode) out of the candidate luminance prediction modes from the luminance sample buffer 1102 and generates a reference luminance block. Similarly, the chrominance prediction mode search unit 1103 reads the reference chrominance sample used by a mode to be searched (chrominance search target mode) out of the candidate chrominance prediction modes from the chrominance sample buffer 1104 and generates a reference chrominance block. The reference luminance block and the reference chrominance block are referred to as predSample [x, y] in Literature 1. Since the generation algorithm corresponding to each of the 35 intra prediction modes is discussed in chapter 8.4.3.1 of Literature 1, it is not described in the present embodiment.

Next, the luminance prediction mode search unit 1101 calculates the difference between the reference luminance block generated from the reference luminance sample obtained from the luminance sample buffer 1102 and the luminance sample obtained from the block buffer 101 for each prediction block of the block to be coded. The luminance prediction mode search unit 1101 generates a luminance prediction residual block which is a difference between the reference luminance block and the luminance sample for each prediction block of the block to be coded. Similarly, the chrominance prediction mode search unit 1103 calculates the difference between the reference chrominance block generated from the reference chrominance sample obtained from the chrominance sample buffer 1104 and the chrominance sample obtained from the block buffer 101 for each prediction block of the block to be coded. The chrominance prediction mode search unit 1103 generates a chrominance prediction residual block which is a difference between the reference chrominance block and the chrominance sample for each prediction block of the block to be coded. According to the present embodiment, the luminance prediction residual block is 16 x 16 pixels, and the chrominance prediction residual block is 8 x 8 pixels for each chrominance component.

Further, the luminance prediction mode search unit 1101 transmits the luminance prediction residual block which has been generated to an integrated prediction mode determination unit 1105. Similarly, the chrominance prediction mode search unit 1103 transmits each chrominance prediction residual block generated for each chrominance component to the integrated prediction mode determination unit 1105.

The integrated prediction mode determination unit 1105 reads the luminance prediction residual block corresponding to the luminance search target mode and the chrominance prediction residual block corresponding to the chrominance search target mode from the luminance prediction mode search unit 1101 and the chrominance prediction mode search unit 1103, respectively. Further, the integrated prediction mode determination unit 1105 calculates an evaluation value of an estimated amount of coding to be processed for the luminance prediction residual block corresponding to the candidate luminance prediction mode. The integrated prediction mode determination unit 1105 also calculates an evaluation value of an estimated amount of coding to be processed for the chrominance prediction residual block corresponding to the candidate chrominance prediction mode. Then, the integrated prediction mode determination unit 1105 determines the luminance intra prediction mode and the chrominance intra prediction mode to be used for the coding based on each of the evaluation values which have been calculated. The calculation method of the evaluation values and the determination method of the luminance intra prediction mode and the chrominance intra prediction mode will be described below.

The luminance intra prediction unit 1106 generates a luminance prediction residual block corresponding to the luminance intra prediction mode determined by the integrated prediction mode determination unit 1105 and transmits the generated luminance prediction residual block to an orthogonal transformation unit 120. Similarly, a chrominance intra prediction unit 1107 generates a chrominance prediction residual block corresponding to the chrominance intra prediction mode determined by the integrated prediction mode determination unit 1105 and transmits the generated chrominance prediction residual block to the orthogonal transformation unit 120.

Next, processing performed by the orthogonal transformation unit 120, a quantization unit 121, an entropy coding and multiplexing unit 122, an inverse quantization unit 123, and an inverse orthogonal transformation unit 124 when the orthogonal transformation unit 120 reads the luminance prediction residual block transmitted from the luminance intra prediction unit 1106 will be described.

The orthogonal transformation unit 120 performs orthogonal transformation of the luminance prediction residual block generated by the luminance intra prediction unit 1106 in units of transformation blocks set by the block size setting unit 102 and generates an orthogonal transform coefficient. Further, the orthogonal transformation unit 120 transmits the generated orthogonal transform coefficient to the quantization unit 121.

The quantization unit 121 quantizes the orthogonal transform coefficient sent from the orthogonal transformation unit 120 based on a quantization parameter sent from the overall control unit 130, and transmits the quantized orthogonal transform coefficient to the entropy coding and multiplexing unit 122.

The entropy coding and multiplexing unit 122 performs entropy coding of the orthogonal transform coefficient quantized by the quantization unit 121. Further, the entropy coding and multiplexing unit 122 performs entropy coding of header information such as the luminance intra prediction mode determined by the integrated prediction mode determination unit 1105. The entropy coding and multiplexing unit 122 multiplexes the orthogonal transform coefficient and the header information both of which have been subjected to entropy coding and outputs the multiplexed data to the outside of the image coding apparatus as an encoded stream.

The inverse quantization unit 123 performs inverse quantization of the orthogonal transform coefficient quantized by the quantization unit 121.

The inverse orthogonal transformation unit 124 performs inverse orthogonal transformation of the orthogonal transform coefficient inversely quantized by the inverse quantization unit 123 in units of transformation block same as the one used for the orthogonal transform by the orthogonal transformation unit 120. Further, the inverse orthogonal transformation unit 124 decodes the orthogonal transform coefficient which has been subjected to the inverse orthogonal transform and generates the luminance prediction residual block. Then, the inverse orthogonal transformation unit 124 transmits the generated luminance prediction residual block to the luminance intra prediction unit 1106.

Regarding the chrominance prediction residual block, processing similar to the processing performed by each of the processing units 120 to 124 with respect to the luminance prediction residual block described above will be used. In other words, if the orthogonal transformation unit 120 reads a chrominance prediction residual block from the chrominance intra prediction unit 1107, each of the processing units 120 to 124 similarly performs the processing of the orthogonal transform, quantization, entropy coding and multiplexing, inverse quantization, and inverse orthogonal transform. Then, the inverse orthogonal transformation unit 124 transmits the generated chrominance prediction residual block to the chrominance intra prediction unit 1107.

The luminance intra prediction unit 1106 generates a reconfigured luminance block by adding the decoded luminance prediction residual block generated by the inverse orthogonal transformation unit 124 and the reference luminance block which has been used when the luminance intra prediction unit 1106 generated the luminance prediction residual block. Further, as illustrated in the shaded portion in Fig. 2C, the luminance intra prediction unit 1106 stores, in the luminance sample buffer 1102, a pixel group at the right end portion and a pixel group at the bottom end portion of a reconfigured luminance block as a reconfigured luminance sample. In other words, the reconfigured luminance sample includes a pixel group at the right end portion of the reconfigured luminance block (r[15, 0] to r[15, 15]) and a pixel group at the bottom end portion of the reconfigured luminance block (r[0, 15] to r[14, 15]). Similarly, the chrominance intra prediction unit 1107 generates a reconfigured chrominance block by adding the decoded chrominance prediction residual block generated by the inverse orthogonal transformation unit 124 and the reference chrominance block used when the chrominance intra prediction unit 1107 generated the chrominance prediction residual block. Further, the chrominance intra prediction unit 1107 stores, in the chrominance sample buffer 1104, a pixel group at the right end portion and a pixel group at the bottom end portion of a reconfigured chrominance block as a reconfigured chrominance sample.

Next, an algorithm used for determining the intra prediction mode by the integrated prediction mode determination unit 1105 using the result of the search performed by the luminance prediction mode search unit 1101 and the chrominance prediction mode search unit 1103 will be described.

According to the present embodiment, the luminance prediction mode search unit 1101 searches for the luminance intra prediction mode and the chrominance prediction mode search unit 1103 searches for the chrominance intra prediction mode in the order below. In the following description, the mode names are based on the names used in chapter 8.4.1 of Literature 1.

> #0: Intra_Planar (Mode 0, planar mode)
> #1: Intra_DC (Mode 1, DC mode)
> #2: Angular_10 (Mode 10, horizontal mode)
> #3: Angular_26 (Mode 26, vertical mode)
> #4: Angular_2 (Mode 2)
> #5: Angular_3 (Mode 3)
> (Modes 4 to 33 excluding Modes 10 and 26)
> #34: Angular_34 (Mode 34)

Each mode number noted in the brackets of the above-described intra prediction modes corresponds to the mode numbers in Fig. 9. For example, Angular_10 (Mode 10) is a mode used for predicting a pixel in the direction 10 in Fig. 9.

The integrated prediction mode determination unit 1105 calculates an evaluation value IStotal[i] according to formula 1 based on the luminance prediction residual block generated by the luminance prediction mode search unit 1101 and the chrominance prediction residual block generated by the chrominance prediction mode search unit 1103. The integrated prediction mode determination unit 1105 calculates the evaluation value IStotal[i] for each of the candidates of the intra prediction modes (each candidate luminance prediction mode and each chrominance prediction mode).

```
IStotal[i] = (Wy[i] x ISy[i]) + (Wcb[i] x IScb[i]) + (Wcr[i]

+ IScr[i])

with i = 0.34        formula 1
```

According to formula 1, "i" indicates a candidate of the intra prediction mode as a search target and corresponds to any one of the above-described #0 to #34. For example, ISy[2] is an evaluation value of the luminance prediction residual block when the luminance intra prediction mode is the horizontal mode (#2).

A luminance evaluation value ISy[i], an Cb evaluation value IScb[i], and an Cr evaluation value IScr[i] are evaluation values indicating the expected amount of codes to be generated regarding the luminance prediction residual block, the Cb component prediction residual block, and the Cr component prediction residual block, respectively. According to the present embodiment, an algorithm called sum of absolute differences (SAD) is used as an evaluation value calculation method for calculating the evaluation value. Thus, the absolute values of the prediction residuals in the prediction residual block are summed according to SAD. In formula 1, Wy[i] denotes a weighting factor of a luminance component, Wcb[i] denotes a weighting factor of a Cb component, and Wcr [i] denotes a weighting factor of a Cr component.

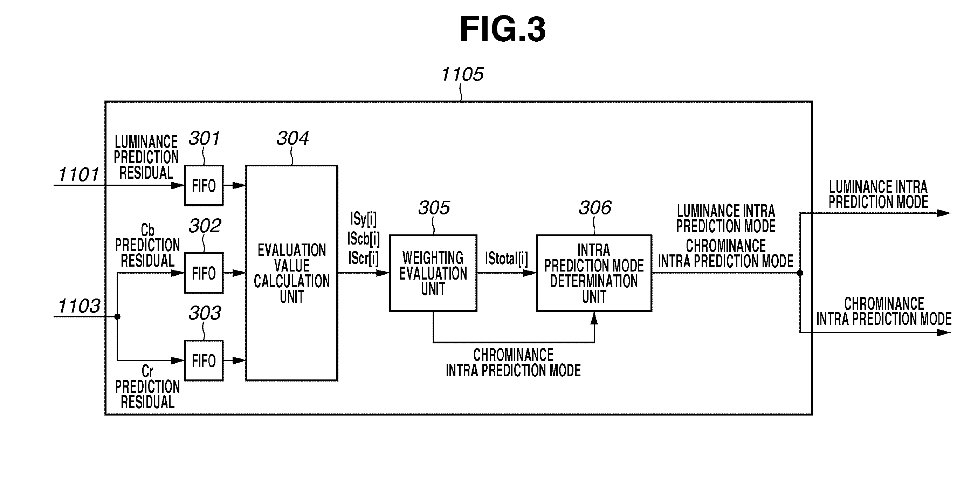

A configuration of the integrated prediction mode determination unit 1105, which realizes formula 1, is illustrated in Fig. 3. As illustrated in Fig. 3, the integrated prediction mode determination unit 1105 according to the present embodiment includes FIFO memories 301 to 303, an evaluation value calculation unit 304, a weighting evaluation unit 305, and an intra prediction mode determination unit 306.

The FIFO memory 301 stores the luminance prediction residual block sent from the luminance prediction mode search unit 1101. Similarly, the FIFO memory 302 and the FIFO memory 303 store the chrominance prediction residual blocks (the Cb prediction residual block and the Cr prediction residual block), respectively. The chrominance prediction residual blocks are sent from the chrominance prediction mode search unit 1103. Generally, the prediction residual blocks (the luminance prediction residual block, the Cb prediction residual block, and the Cr prediction residual block) are generated at different timing. Regarding the integrated prediction mode determination unit 1105, since each prediction residual block is transmitted to the evaluation value calculation unit 304 after it is stored in the FIFO memory 301, 302, or 303, synchronization of the prediction residual blocks can be achieved.

The evaluation value calculation unit 304 reads the luminance prediction residual block, the Cb prediction residual block, and the Cr prediction residual block from the FIFO memories 301 to 303, respectively. Then, the evaluation value calculation unit 304 calculates the luminance evaluation value ISy[i], the Cb evaluation value IScb[i], and the Cr evaluation value IScr[i], which are the evaluation values of the luminance prediction residual block, the Cb prediction residual block, and the Cr prediction residual block, respectively. The evaluation value calculation unit 304 calculates the luminance evaluation value ISy[i], the Cb evaluation value IScb[i], and the Cr evaluation value IScr[i] at different timing. Thus, the evaluation value calculation unit 304 can be shared and it is not necessary to prepare an evaluation value calculation unit for calculating the evaluation value for each of the components (the luminance component, the Cb component, and the Cb component). Accordingly, the image coding apparatus including the evaluation value calculation unit 304 according to the present embodiment can reduce the circuit size compared to a case where an evaluation value calculation unit is prepared for each component.

The weighting evaluation unit 305 calculates the evaluation value IStotal[i] by summing up the results obtained by weighting (multiplying) the evaluation values ISy[i], IScb[i], and IScr[i] by the weighting factors Wy[i], Wcb[i], and Wcr[i], respectively. The evaluation value IStotal[i] is calculated for each of the candidate intra prediction modes (each of the candidate luminance prediction modes and the candidate chrominance prediction modes).

The intra prediction mode determination unit 306 reads the evaluation values IStotal[i], which are the evaluation values of the candidate intra prediction modes, from the weighting evaluation unit 305, and stores them. Then, the intra prediction mode determination unit 306 determines the mode corresponding to the minimum evaluation value IStotal[i] out of all the candidate intra prediction modes, which is, in other words, the mode with the minimum amount of coding, as the optimum intra prediction mode. Thus, the luminance intra prediction mode and the chrominance intra prediction mode are determined. As described below, the intra prediction mode determination unit 306 can also output a chrominance intra prediction mode determined by the weighting evaluation unit 305.

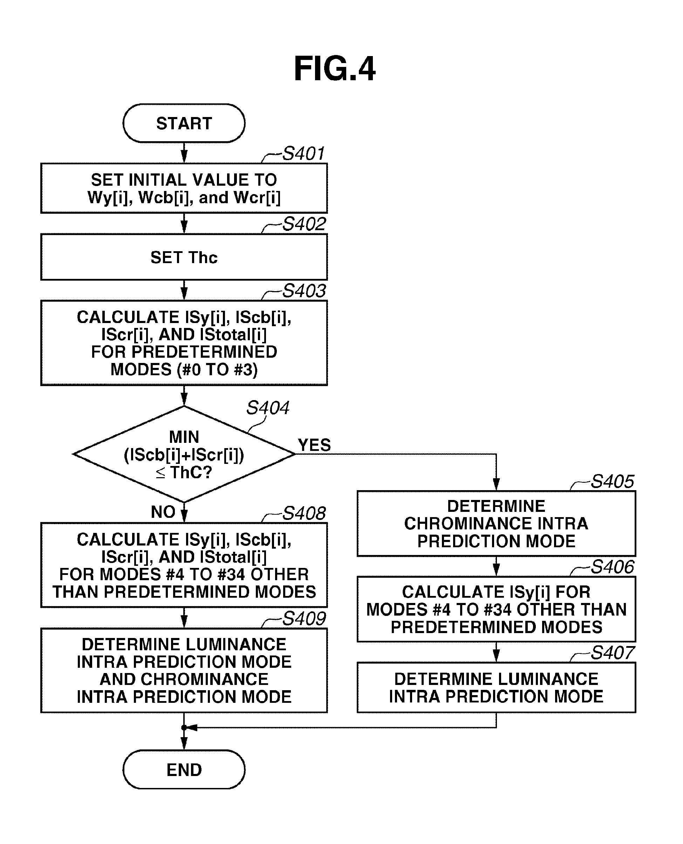

Next, the determination method of each of the weighting factors Wy[i], Wcb[i], and Wcr[i] used by the weighting evaluation unit 305 and the determination method of the luminance intra prediction mode and the chrominance intra prediction mode used by the intra prediction mode determination unit 306 will be described with reference to the flowchart in Fig. 4.

In step S401, the weighting evaluation unit 305 sets an initial value for each of the weighting factors Wy[i], Wcb[i], and Wcr[i]. According to the present embodiment, as shown in formulae 2 to 4, the initial values of the weighting factors Wy[i], Wcb[i], and Wcr[i] are based on a ratio between a quantization parameter of the luminance component and a quantization parameter of each of the chrominance components.

$$Wy[i] = 1 \qquad \text{formula 2}$$

$$Wcb[i] = \alpha cb \times qp\_luma/(qp\_luma + qp\_cb\_offset) \qquad \text{formula 3}$$

$$Wcr[i] = \alpha cr \times qp\_luma/(qp\_luma + qp\_cr\_offset) \qquad \text{formula 4}$$

Next, each parameter in formulae 3 and 4 will be described.

First, qp_luma is a quantization parameter of a luminance component of the block to be coded. Further, qp_cb_offset is a quantization parameter offset from the chrominance component (Cb component) and qp_cr_offset is a quantization parameter offset from the chrominance component (Cr component). Each of qp_cb_offset and qp_cr_offset indicates an offset (difference) from the quantization parameter. Further, each of αcb and αcr is a parameter which can be set to an arbitrary value by the user of the image coding apparatus. Thus, the parameters αcb and αcr can be customized according to the content of the image and the application. Further, the weighting evaluation unit 305 can adjust the amount of coding of each component by setting the parameters αcb and αcr based on a target amount of coding based on a data capacity set in advance by the user or an amount of coding of the header information. Further, the initial values of the weighting factors Wy[i], Wcb[i], and Wcb[i] and the parameters αcb and αcr in formulae 2 to 4 are set in the weighting evaluation unit 305 by the overall control unit 130 illustrated in Fig. 1.

In step S402, the weighting evaluation unit 305 sets a threshold value ThC. The threshold value ThC, which is described below, is used for determining the chrominance intra prediction mode to be one mode out of the planar mode, DC mode, horizontal mode, and vertical mode. The threshold value ThC is set by the user. The threshold value ThC is set in the overall control unit 130 and further sent to the weighting evaluation unit 305 from the overall control unit 130.

In step S403, the weighting evaluation unit 305 calculates each of the evaluation values $ISy[i]$, $IScb[i]$, and $IScr[i]$ as well as $IStotal[i]$ corresponding to the predetermined modes of the luminance intra prediction modes and the chrominance intra prediction modes. According to the present embodiment, the predetermined modes are the planar mode (#0), DC mode (#1), horizontal mode (#2), and vertical mode (#3). Further, each of the predetermined modes (#0 to #3) can be selected as a chrominance intra prediction mode regardless of the luminance intra prediction mode.

In step S404, the weighting evaluation unit 305 calculates the minimum value of the sum of the Cb evaluation value $IScb[i]$ and the Cr evaluation value $IScr[i]$ for each predetermined mode obtained in step S403. In other words, the weighting evaluation unit 305 calculates the minimum value of $IScb[i] + IScr[i]$. According to the present embodiment, $IScb[i] + IScr[i]$ is called a chrominance component evaluation value. Then, the weighting evaluation unit 305 compares the obtained minimum value of the chrominance component evaluation values with the threshold value ThC set in step S402 and determines whether the minimum value of the chrominance component evaluation values is equal to or less than the threshold value ThC. If the minimum value of the chrominance component evaluation values is equal to or less than the threshold value ThC (YES in step S404), the processing proceeds to step S405. If the minimum value of the chrominance component evaluation value is greater than the threshold value ThC (NO in step S404), the processing proceeds to step S408.

According to the present embodiment, although the weighting evaluation unit 305 compares the minimum value of the chrominance component evaluation values and the threshold value ThC set in the overall control unit 130 and determines whether the minimum value of the chrominance component evaluation values is equal to or less than the threshold value ThC, the determination method of the present invention is not limited to such an example. For example, in step S404, the weighting evaluation unit 305 can determine whether a mode having the chrominance component evaluation value less than the threshold value ThC exists in the predetermined modes calculated in step S403. If such a mode exists, the processing proceeds to step S405. If such a mode does not exist, the processing proceeds to step S408.

In step S404, if the minimum value of the chrominance component evaluation values $IScb[i] + IScr[i]$ is equal to or less than the threshold value ThC (YES in step S404), in step S405, the weighting evaluation unit 305 determines the chrominance intra prediction mode to be used for the coding of the chrominance component. The chrominance intra prediction mode to be used for the coding is the mode corresponding to the minimum $IScb[i] + IScr[i]$ of the chrominance component evaluation values out of the predetermined modes. Further, the weighting evaluation unit 305 transmits the determined chrominance intra prediction mode to the intra prediction mode determination unit 306. Since the minimum value of the chrominance component evaluation values is equal to or less than the threshold value ThC and satisfactorily small, in step S405, the weighting evaluation unit 305 determines that sufficient coding efficiency of the chrominance component can be obtained by using the mode corresponding to the minimum value of the chrominance component evaluation values as the chrominance intra prediction mode.

In step S406, the weighting evaluation unit 305 calculates the luminance evaluation value $ISy[i]$ corresponding to each of the modes #4 to #34 (i.e., modes other than the predetermined modes #0 to #3). The overall control unit 130 can set each of the weighting factors $Wcb[i]$ and $Wcr[i]$ of the chrominance components used by the weighting evaluation unit 305 to zero. In other words, in step S406, the overall control unit 130 can set $IStotal[i] = ISy[i]$ as the evaluation value corresponding to each of the modes #0 to #34 so that the weighting evaluation unit 305 can obtain the evaluation value $IStotal[i]$. The chrominance intra prediction mode determined in step S405 can be selected regardless of the luminance intra prediction mode. Thus, by calculating only the luminance evaluation value $ISy[i]$ or by calculating the evaluation value $IStotal[i]$ while setting each of the weighting factors $Wcb[i]$ and $Wcb[i]$ of the chrominance components to zero, the optimum luminance intra prediction mode can be searched in consideration of only the luminance component.

In step S407, the intra prediction mode determination unit 306 determines the mode with the minimum luminance evaluation value $ISy[i]$ out of the candidate luminance prediction modes (modes #0 to #34) as the luminance intra prediction mode. In step 5406, if the weighting evaluation unit 305 calculates the evaluation value $IStotal[i]$ while the weighting factors $Wcb[i]$ and $Wcr[i]$ of the chrominance components are set to zero by the overall control unit 130, the following processing is performed. In other words, in this case, the intra prediction mode determination unit 306 can determine the mode having the minimum evaluation value $IStotal[i]$ as the intra prediction mode by using the weighting factors $Wcb[i]$ and $Wcr[i]$ of the chrominance components which are set to zero.

As described above, according to the processing in steps S404 to 407, the chrominance intra prediction mode is determined based on the evaluation values of the predetermined modes that do not depend on the luminance intra prediction modes. Then, the luminance intra prediction mode is determined based only on the luminance evaluation value $ISy[i]$. Accordingly, if the evaluation value in a case where a predetermined mode is set as the chrominance intra prediction mode is equal to or less than the threshold value ThC, it is not necessary to search all the candidate chrominance prediction modes. Accordingly, a computation amount can be reduced. Further, if the evaluation value when the predetermined mode is set as the chrominance intra prediction mode, is equal to or less than the threshold value ThC, the luminance intra prediction mode can be selected without being excessively affected by the coding efficiency of the chrominance component.

In step S408, the weighting evaluation unit 305 calculates each of the evaluation values ISy[i], IScb[i], IScr[i], and IStotal[i] corresponding to each of the modes #4 to #34 (modes other than the predetermined modes #0 to #3).

In step S409, the intra prediction mode determination unit 306 determines the mode with the minimum evaluation value IStotal[i] out of the candidate luminance prediction modes (modes #0 to #34) as the luminance intra prediction mode. Further, in step S409, the intra prediction mode determination unit 306 determines the chrominance intra prediction mode as the luminance reference mode. In other words, in step S404, if the minimum value of the chrominance component evaluation values is greater than the threshold value ThC (NO in step S404), the intra prediction mode determination unit 306 determines the mode which is same as the luminance intra prediction mode determined in step S409 as the chrominance intra prediction mode.

As described above, by weighting and summing up each evaluation value corresponding to each of the candidate luminance prediction modes and the candidate chrominance prediction modes, the luminance intra prediction mode and the chrominance intra prediction mode can be determined in consideration of the coding efficiency of the chrominance components.

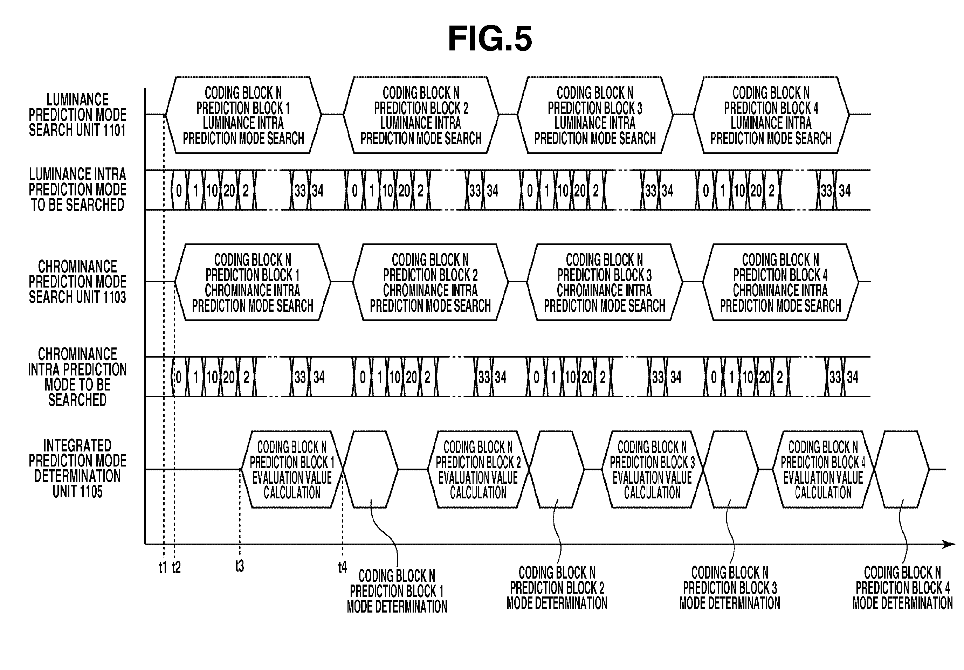

Next, each operation performed by the luminance prediction mode search unit 1101, the chrominance prediction mode search unit 1103, and the integrated prediction mode determination unit 1105 will be described in a time sequential manner with reference to Fig. 5. Fig. 5 is a timing chart illustrating encoding timing of each coding block of 32 x 32 pixels illustrated in Fig. 2A. In Fig. 5, four prediction blocks of 16 x 16 pixels are processed.

A time t1, the luminance prediction mode search unit 1101 generates a reference luminance block corresponding to Intra_Planar (#0, "0" in Fig. 5) based on the reference luminance sample obtained from the luminance sample buffer 1102. Then, the luminance prediction mode search unit 1101 calculates a luminance prediction residual block, which is a difference between the luminance sample of the prediction target block (prediction block 1 in Fig. 2A) obtained from the block buffer 101 and the reference luminance block which has been generated. Further, the luminance prediction mode search unit 1101 transmits the calculated luminance prediction residual block to the integrated prediction mode determination unit 1105. Subsequently, the luminance prediction mode search unit 1101 calculates a luminance prediction residual block corresponding to each of Intra_DC (#1, "1" in Fig. 5) and Angular_10 to Angular_34 (#2 to #34, "2" to "34" in Fig. 5), and the obtained result is transmitted to the integrated prediction mode determination unit 1105. In this manner, the luminance prediction mode search unit 1101 performs search processing for all the modes (35 modes) which are the candidate luminance prediction modes.

At time t2, the chrominance prediction mode search unit 1103 generates a reference chrominance block corresponding to Intra_Planar (#0) for each of the chrominance components (Cb component and Cr component) based on the reference chrominance sample obtained from the chrominance sample buffer 1104. Further, the chrominance prediction mode search unit 1103 calculates a chrominance prediction residual block, which is a difference between the chrominance sample of the prediction target block (prediction block 1 in Fig. 2A) obtained from the block buffer 101 and the generated reference chrominance block. Then, the chrominance prediction mode search unit 1103 transmits the chrominance prediction residual block which has been obtained to the integrated prediction mode determination unit 1105. Subsequently, the chrominance prediction mode search unit 1103 calculates a chrominance prediction residual block corresponding to each of Intra_DC (#1) and Angular_10 to Angular_34 (#2 to #34), and the obtained result is transmitted to the integrated prediction mode determination unit 1105. In this manner, the chrominance prediction mode search unit 1103 performs the search processing for all the modes (35 modes) which are the candidate chrominance prediction modes.

According to the present embodiment, unless the chrominance prediction mode search unit 1103 finishes the generation of each chrominance prediction residual block of each of the chrominance components (Cb component and Cr component) of one candidate chrominance prediction mode, the chrominance prediction mode search unit 1103 does not start the search of the next candidate chrominance prediction mode. According to the present embodiment, the input image format is 4:2:0. If the input image format is 4:2:0, the pixel sample number of the Cb component in the coding block is 1/4 of the pixel sample number of the luminance component. Thus, the prediction residual block generation processing of the chrominance component can be performed at a higher speed than the prediction residual block generation processing of the luminance component.

At time t3, since the prediction residual blocks of all the components (luminance component, Cb component, and Cr component) stored in the FIFO memory 301 to 303 can be used, the integrated prediction mode determination unit 1105 calculates the evaluation value of each candidate prediction mode.

At time t4, since the evaluation values corresponding to all the candidate luminance prediction modes and candidate chrominance prediction modes are calculated, the luminance intra prediction mode and the chrominance intra prediction mode are determined as described above with reference to the flowchart in Fig. 4.

By repeating the above-described processing for a number of times corresponding to the number of all the prediction blocks in the block to be coded and the number of coding blocks in the screen, the entire screen can be coded.

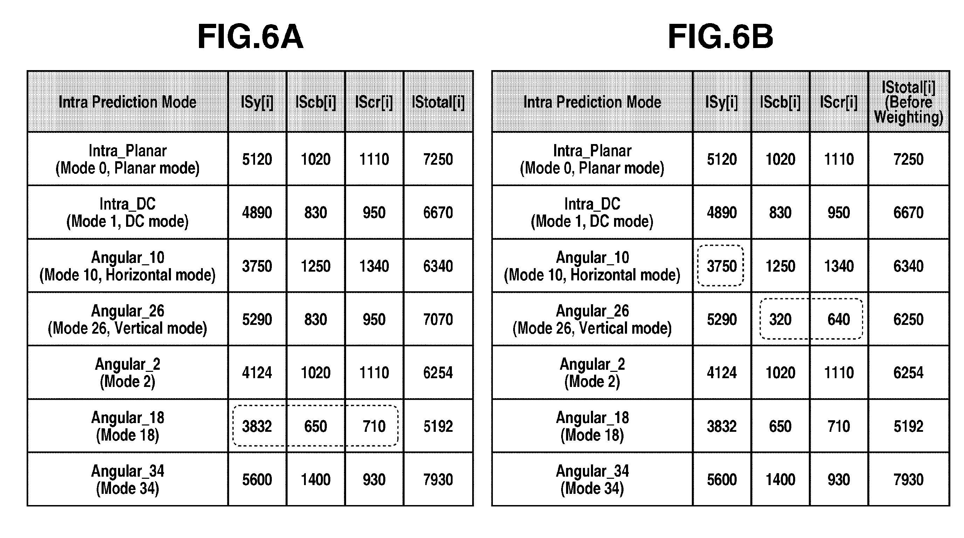

Figs. 6A and 6B are tables illustrating examples of the search and the determination process of the luminance intra prediction mode and the chrominance intra prediction mode which have been determined according to the above-described algorithm using weighting. Each numeral in the tables is an evaluation value of a prediction residual block corresponding to each intra prediction mode.

Although only seven intra prediction modes are shown in Figs. 6A and 6B for the sake of convenience of description, the intra prediction modes used in the present invention are not limited to the seven modes. In other words, all the 35 modes which can be used can be presented as the intra prediction modes but an arbitrary group of prediction modes can also be used. According to the examples of the evaluation values illustrated in Figs. 6A and 6B, each of the parameters $\alpha cb$ and $\alpha cr$ in formulae 3 and 4 is set to "1". Further, qp_cb_offset and qp_cr_offset, each of which is the quantization parameter offset, is set to zero, and each of the initial values of the weighting factors of Wcb[i] and Wcr[i] of the difference component is set to 1. Furthermore, the threshold value ThC set in step S402 in Fig. 4 is set to 1000.

In Fig. 6A, if the optimum luminance intra prediction mode is to be determined in consideration of only the luminance component as is determined by the conventional technique, Angular_10 (horizontal mode) will be selected as the luminance intra prediction mode. Angular_10 is the luminance intra prediction mode with the smallest expected amount of codes to be generated. However, if the luminance intra prediction mode is Angular_10, Angular_18, which is the mode with the highest coding efficiency regarding the chrominance components, cannot be selected as the chrominance intra prediction mode. Thus, the amount of coding of the sum of the luminance component and the chrominance components will not be optimized. Accordingly, in Fig. 6A, if the luminance intra prediction mode is selected in consideration of only the luminance component, unlike the case where the luminance intra prediction mode is selected in consideration of the chrominance component, which is performed in the present invention, the coding efficiency will be reduced.

On the other hand, in Fig. 6A, the evaluation value IStotal[i] considering the chrominance components as well as the luminance component is minimized when the luminance intra prediction mode and the chrominance intra prediction mode are Angular_18. Thus, according to the present embodiment, if HEVC is used as the coding format, Angular_18 will be selected as the luminance intra prediction mode and the luminance reference mode will be selected as the chrominance intra prediction mode. In this manner, Angular_18 can be used as the chrominance intra prediction mode. By considering the chrominance components as well as the luminance component, the luminance intra prediction mode with the optimum (minimum) amount of coding regarding the sum of the luminance component and the chrominance components can be selected.

Fig. 6B illustrates an example where the threshold value ThC of the evaluation value of the chrominance intra prediction mode is effectively used. Regarding Angular_26 (vertical mode), although the evaluation value ISy[i] of the luminance component is not optimum, each of the evaluation values IScb[i] and IScr[i] of the chrominance components is optimum, and the chrominance component evaluation value IScb[i] + IScr[i] is less than the threshold value ThC (1000). Thus, in Fig. 6B, the chrominance intra prediction mode is set to Angular_26, which is a selectable mode and does not depend on the luminance component. Further, the luminance intra prediction mode is set to Angular_10 (horizontal mode), which is a mode with the optimum (minimum) evaluation value ISy[i] of the luminance component. In this manner, regarding the chrominance intra prediction mode, if an evaluation value of a mode which is selectable and does not depend on the luminance component is satisfactorily small, a mode different from the luminance intra prediction mode will be used for the chrominance intra prediction mode to optimize the coding efficiency.

According to the present embodiment, although the prediction block size of the luminance component is 16 x 16 pixels and the prediction block size of each chrominance component is 8 x 8 pixels, the prediction block size of the present invention is not limited to such examples. That is, among the prediction block sizes which can be used by HEVC (64 x 64 pixels, 32 x 32 pixels, 16 x 16 pixels, 8 x 8 pixels, and 4 x 4 pixels), any size equal to or smaller than the coding block size can be used. For example, if the coding block size used in the coding of HEVC is 32 x 32 pixels, a prediction block size of any one of 32 x 32 pixels, 16 x 16 pixels, 8 x 8 pixels, and 4 x 4 pixels can be used.

Further, the transformation block size of the present invention is not limited to the example described above. In other words, according to the image coding apparatus using HEVC, among the transformation block sizes (32 x 32 pixels, 16 x 16 pixels, 8 x 8 pixels, and 4 x 4 pixels) which can be used by HEVC, any block size equal to or smaller than the coding block size can be used. For example, regarding coding using HEVC, if the coding block size is 32 x 32 pixels, any pixel size out of 32 x 32 pixels, 16 x 16 pixels, 8 x 8 pixels, and 4 x 4 pixels can be used as the transformation block size.

Further, according to the present embodiment, the block size setting unit 102 sets the prediction block size in advance based on a data analysis of the block to be coded. However, the determination method of the prediction block size according to present invention is not limited to such an example. In other words, the block size setting unit 102 can set the prediction block size by causing each unit in the intra prediction unit 110 to operate with respect to all the prediction block sizes which can be used and search the optimum prediction block size. Further, the block size setting unit 102 can read and set the prediction block size and the transformation block size which have been determined in advance inside/outside the image coding apparatus of the present invention. The determination method of the prediction block size according to the present invention does not depend on a particular algorithm and any existing algorithm can be applied to the present invention.

Further, according to the present embodiment, the luminance prediction mode search unit 1101 uses a predetermined luminance pixel group stored in the luminance sample buffer 1102 as a reference luminance sample. Similarly, according to the present embodiment, the chrominance prediction mode search unit 1103 uses a predetermined chrominance pixel group stored in the chrominance sample buffer 1104 as a reference chrominance sample. However, the method for searching each intra prediction mode of the present invention is not limited to such examples. In other words, the luminance prediction mode search unit 1101 and the chrominance prediction mode search unit 1103 can search for each intra prediction mode by using a luminance sample and a chrominance sample of a block to be coded and an adjacent coding block stored in the block buffer 101. In this manner, high speed search processing can be realized.

According to the present embodiment, although an algorithm which evaluates all the candidate intra prediction modes is used, the algorithm of the present invention is not limited to such an example. In other words, an algorithm which searches for an intra prediction mode while, for example, skipping evaluation processing of some of the candidate intra prediction modes can be used in a similar method. In this manner, high speed operation can be realized. Further, the search order of the candidate intra prediction modes is not limited to the above-described example and the search can be performed in any order.

According to the present embodiment, although the input image format is set to 4:2:0, the input image format of the present invention is not limited to such a format. In other words, the input image format does not depend on the ratio of the pixel sample number of the luminance component (luminance sample number) and the sample number of the chrominance component (chrominance sample number), and any input image format selected from the generally-used formats (4:2:0, 4:2:2, and 4:4:4) can be used.

Further, according to the present embodiment, although the luminance intra prediction mode is determined by weighting and summing up each evaluation value corresponding to the intra prediction mode of the luminance component and the chrominance components, the determination method evaluation value of the present invention is not limited to such a method. In other words, any method can be used in the determination of the luminance intra prediction mode so long as the luminance intra prediction mode is determined in consideration of the coding efficiency of the chrominance components. According to the present embodiment, the weighting evaluation unit 305 calculates the evaluation value IStotal[i] by summing up the results obtained by weighting (multiplying) the evaluation values ISy[i], IScb[i], and IScr[i] by the weighting factors Wy[i], Wcb[i], and Wcr[i], respectively. However, the calculation method of the present invention is not limited to such an example. For example, the luminance intra prediction mode can be determined by calculating only the chrominance evaluation values IScb[i] and IScr[i] and weighting them using the weighting factors Wcb[i] and Wcr[i]. In this case, since the luminance evaluation value ISy[i] is not calculated, a computation amount can be reduced.

In formulae 2 to 4, the weighting factors Wy, Wcb, and Wcr are calculated without using the ratio between the luminance sample number and the chrominance sample number since SAD is used for calculating each evaluation value in the present embodiment. The value obtained according to SAD is proportional to each sample number. Thus, if an evaluation value that does not depend on the ratio between the luminance sample number and the chrominance sample number is used, each of the weighting factors Wy, Wcb, and Wcr needs to be determined for each sample number as is determined by the embodiments described below.

Further, the evaluation value calculation method is not limited to the above-described SAD, and the evaluation value can be obtained by using any calculation method such as a method using distribution of prediction residual blocks. Further, although only the I slice, which is coded by intra prediction, is the coding target of the present embodiment, and the P slice and the B slice, which are associated with motion vectors and use inter prediction for coding, are not the coding targets of the present invention, as described in a third embodiment described below, the present embodiment can be applied to coding of a coding block of a P slice or a B slice by intra prediction.

Next, a second embodiment of the present invention will be described. The configuration of the image coding apparatus according to the present embodiment is similar to the configuration illustrated in Fig. 1 according to the first embodiment except for the inside of the integrated prediction mode determination unit 1105 which is illustrated in Fig. 3. Further, according to the present embodiment, a method different from SAD, which is used in the first embodiment, will be used as the evaluation value calculation method for calculating the evaluation values for each intra prediction mode. Furthermore, since the flowchart in Fig. 4 and the timing chart in Fig. 5 according to the first embodiment can be applied to the present embodiment, their descriptions are not repeated. According to the present embodiment, the input image format is 4:2:0.

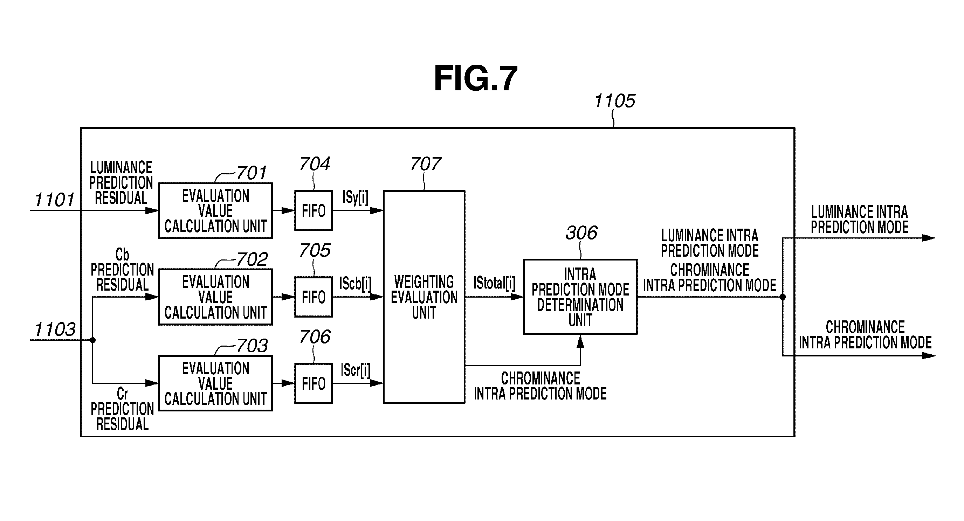

Fig. 7 illustrates the inner configuration of the integrated prediction mode determination unit 1105 according to the present embodiment. The integrated prediction mode determination unit 1105 includes evaluation value calculation units 701, 702, and 703, FIFO memories 704, 705, and 706, a weighting evaluation unit 707, and the prediction mode determination unit 306. The processing units in Fig. 7, which are similar to those illustrated in Fig. 3, are denoted by the same reference numerals and their descriptions are not repeated.

The evaluation value calculation unit 701 calculates the evaluation value ISy[i] of the luminance prediction residual block sent from the luminance prediction mode search unit 1101 in Fig. 1 and stores it in the FIFO memory 704. The evaluation value calculation units 702 and 703 calculate the evaluation value IScb[i] and the evaluation value IScr[i] of the chrominance prediction residual block sent from the chrominance prediction mode search unit 1103 and store them in the FIFO memories 705 and FIFO 706, respectively.

The weighting evaluation unit 707 calculates the evaluation value IStotal[i] by summing up the results obtained by weighting each of the evaluation values ISy[i], IScb[i], and IScr[i] read from the FIFO memories 704, 705, and 706 as is performed by the weighting evaluation unit 305 in Fig. 3 according to the first embodiment. By weighting and summing up each evaluation value corresponding to the candidate luminance prediction mode and the candidate chrominance prediction mode, the luminance intra prediction mode and the chrominance intra prediction mode can be determined in consideration of the coding efficiency of the chrominance components.

According to the present embodiment, a maximum absolute value of the luminance prediction residual block with a size of 32 x 32 pixels is used for the calculation of the evaluation value ISy[i] by the evaluation value calculation unit 701. Further, a maximum absolute value of the chrominance prediction residual block with a size of 16 x 16 pixels is used for the calculation of the evaluation values IScb[i] and IScr[i] by the evaluation value calculation units 702 and 703.

Further, according to the present embodiment, each of the initial values of the weighting factors Wy[i], Wcb[i], and Wcb[i] for the luminance prediction residual block and the chrominance prediction residual block used by the weighting evaluation unit 305 are determined as follows.

$$Wy[i] = 4 \qquad \text{formula 5}$$

$$Wcb[i] = \alpha cb \times qp\_luma/(qp\_luma + qp\_cb\_offset) \qquad \text{formula 6}$$

$$Wcr[i] = \alpha cr \times qp\_luma/(qp\_luma + qp\_cr\_offset) \qquad \text{formula 7}$$

According to the present embodiment, a method that does not depend on the input image format will be used as the evaluation value calculation method for calculating each of the evaluation values ISy[i], IScb[i], and IScr[i]. Thus, the method used in the present embodiment is unlike SAD, which is dependent on the input image format and used in the first embodiment. As shown in formula 5, the ratio between the luminance sample number and the chrominance sample number is reflected on the initial value of each of the weighting factors Wy[i], Wcb[i], and Wcr[i]. According to the present embodiment, the input image format is 4:2:0. If the input image format is 4:2:0, since the luminance sample number is four times the chrominance sample number, the weighting factor Wy[i] is 4 in formula 5.

In this manner, if each evaluation value is calculated by using an evaluation value calculation method that does not depend on the input image format, by reflecting the difference between the luminance sample number and the chrominance sample number based on the input image format on each weighting factor, the evaluation value IStotal[i] which is appropriate can be obtained. Although the input image format is 4:2:0 according to the present embodiment, any input image format including 4:2:2 and 4:4:4 can be used by changing the initial value of each of the weighting factors.

Regarding the integrated prediction mode determination unit 1105 according to the present embodiment, the circuit size of the evaluation value calculation units 701 to 703 is larger than the circuit size of the evaluation value calculation unit 304 of the integrated prediction mode determination unit 1105 according to the first embodiment. On the other hand, the capacity necessary for each of the FIFO memories 704 to 706 according to the present embodiment is smaller than the capacity necessary for each of the FIFO memories 301 to 303 according to the first embodiment.

According to the first embodiment, the FIFO memory 301 needs a capacity corresponding to 32 x 32 pixels in storing a luminance prediction residual block for one luminance intra prediction mode since the coding block size is 32 x 32 pixels. In other words, since each of the prediction residual blocks is a 9-bit block, the FIFO memory 301 according to the first embodiment needs a capacity of 9216 (32 x 32 x 9) bits for one luminance intra prediction mode.

On the other hand, according to the present embodiment, the FIFO memory 704 needs a capacity of 32 bits in storing an evaluation value of a luminance prediction residual block for one luminance intra prediction mode. This is because the data amount of one evaluation value is generally 32 bits. Thus, while the FIFO memory 301 of the first embodiment requires 9216 bits for one luminance intra prediction mode, the FIFO memory 701 of the present embodiment requires 32 bits. Thus, the necessary capacity can be reduced according to the present embodiment. Especially, the more the prediction block size is increased, the smaller a circuit size becomes in the present embodiment over the configuration of the first embodiment. As a result, the cost can be reduced. Although the prediction block size and the intra prediction mode search algorithm similar to those in the first embodiment are used in the present embodiment, the present invention is not dependent on a particular prediction block size or a particular intra prediction mode search algorithm.

Next, the third embodiment of the present invention will be described. According to the first and the second embodiments described above, only the I slice, which is coded by intra prediction, is used for the coding. According to the present embodiment, an image coding apparatus which uses inter prediction and codes the P slice and B slice using motion vector in addition to the intra prediction will be described.

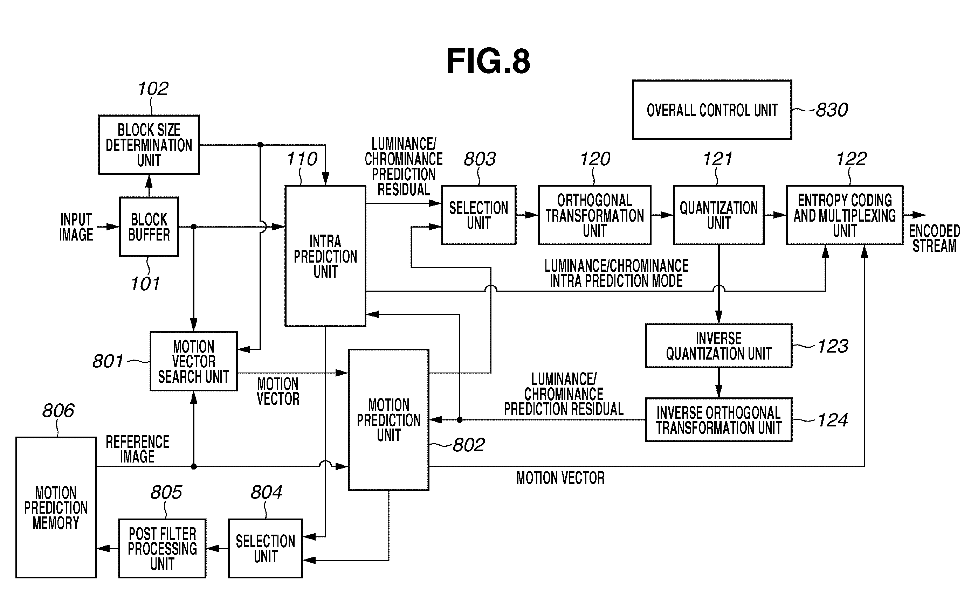

Fig. 8 illustrates the image coding apparatus according to the present embodiment. Processing units in Fig. 8, which perform processing similar to the processing performed by the processing units according to the first and the second embodiments illustrated in Fig. 1, are denoted by the reference numerals same as those in Fig. 1 and their descriptions are not repeated.

A motion vector search unit 801 calculates a candidate motion vector based on a motion vector search algorithm set in advance. The motion vector search unit 801 reads, from a motion prediction memory 806, a reconfigured luminance sample corresponding to a motion vector as a search target (search target vector) out of the calculated candidate motion vectors. The motion vector search unit 801 generates a reference luminance block from the reconfigured luminance sample read from the motion prediction memory 806 based on the prediction block size set by the block size setting unit 102. According to the present embodiment, the prediction block size is 16 x 16 pixels as is the block size is with the first and the second embodiments. Thus, according to the present embodiment, the size of the reconfigured luminance sample read from the motion prediction memory 806 and the size of the reference luminance block generated by the motion vector search unit 801 are 16 x 16 pixels. The generation method of the reconfigured luminance sample stored in the memory for motion prediction will be described below.

The motion vector search unit 801 calculates a difference between the generated reference luminance block and the luminance sample of the prediction target block obtained from the block buffer 101 and generates a luminance prediction residual block. Further, based on the generated luminance prediction residual block, the motion vector search unit 801 calculates the evaluation value corresponding to each candidate motion vector. The evaluation value is an estimated occurrence amount of the luminance prediction residual block. Further, as a method for calculating the evaluation value, any calculation method including SAD can be used. Further, the motion vector search unit 801 similarly calculates an evaluation value for all the candidate motion vectors and determines the candidate motion vector corresponding to the optimum evaluation value out of the calculated evaluation values as the motion vector to be used for the prediction. Then, the motion vector search unit 801 transmits the determined motion vector to a motion prediction unit 802.

According to the present embodiment, although the motion vector search unit 801 calculates the motion vector considering the luminance component, the determination method of the motion vector of the present invention is not limited to such an example. In other words, the motion vector search unit 801 can generate the chrominance prediction residual block by processing similar to the processing applied to the above-described luminance component and determine the motion vector according to the evaluation value of each candidate motion vector which has been calculated based on the chrominance prediction residual block. Further, the motion vector search unit 801 can determine the motion vector considering both the evaluation value which has been calculated based on the luminance prediction residual block and the evaluation value which has been calculated based on the chrominance prediction residual block.

Next, the motion prediction unit 802 reads a reconfigured luminance sample corresponding to the motion vector from the motion prediction memory 806 based on the motion vector determined by the motion vector search unit 801 and generates a reference luminance block. Further, the motion prediction unit 802 generates a luminance prediction residual block which is the difference between the generated reference luminance block and a luminance sample obtained from the block buffer 101, and calculates an evaluation value of the generated luminance prediction residual block. Furthermore, the motion prediction unit 802 transmits the motion vector determined by the motion vector search unit 801 to the entropy coding and multiplexing unit 122.

An overall control unit 830 compares the evaluation value calculated by the intra prediction unit 110 and the evaluation value calculated by the motion prediction unit 802. The evaluation value calculated by the intra prediction unit 110 is an evaluation value which is calculated in association with the luminance intra prediction mode determined by the integrated prediction mode determination unit 1105. Further, the evaluation value calculated by the motion prediction unit 802 is an evaluation value which is calculated in association with the motion vector determined by the motion vector search unit 801. Furthermore, the overall control unit 830 determines whether to use the intra prediction or the inter prediction for the prediction of the prediction target block based on the result of the comparison and transmits the determined prediction method to a selection unit 803.

The selection unit 803 reads a luminance prediction residual block of the determined prediction method from the intra prediction unit 110 or the motion prediction unit 802 and outputs the luminance prediction residual block to the orthogonal transformation unit 120, based on the prediction method determined by the overall control unit 830. In other words, if the prediction method determined by the overall control unit 830 is intra prediction, the selection unit 803 reads a luminance prediction residual block from the intra prediction unit 110 and outputs it to the orthogonal transformation unit 120. On the other hand, if the prediction method determined by the overall control unit 830 is inter prediction, the selection unit 803 reads a luminance prediction residual block from the motion prediction unit 802 and outputs it to the orthogonal transformation unit 120.

The orthogonal transformation unit 120, the quantization unit 121, and the entropy coding and multiplexing unit 122 perform orthogonal transform, quantization, and entropy coding and multiplexing processing on the luminance prediction residual block read from the selection unit 803, respectively. Since the processing performed by the inverse quantization unit 123 and the inverse orthogonal transformation unit 124 is similar to the processing described in the first and the second embodiments, the description of the processing is not repeated.

The motion prediction unit 802 reads the luminance prediction residual block decoded and generated by the inverse orthogonal transformation unit 124 from the inverse orthogonal transformation unit 124. Then, the motion prediction unit 802 adds the reference luminance block, which has been used for generating the luminance prediction residual block by the motion vector search unit 801, to the luminance prediction residual block, and outputs the obtained result to the selection unit 804 as a reconfigured luminance block.

Based on the control of the overall control unit 830, the selection unit 804 selects either the reconfigured luminance block generated by the intra prediction unit 110 or the reconfigured luminance block generated by the motion prediction unit 802, and outputs the selected block to a post filter processing unit 805.

The post filter processing unit 805 performs filter processing such as deblocking filter processing with respect to the reconfigured luminance block obtained from the selection unit 804, and reduces the image quality deterioration. Further, the post filter processing unit 805 stores the image, which has undergone the filter processing, in the motion prediction memory 806. The reconfigured luminance block, which is stored in the motion prediction memory 806, is used for generating a reference luminance block for inter prediction of the subsequent image.

Although each of the processing units 802 to 806, 830, 101, 102, 110, and 120 to 124 in the descriptions above and illustrated in Fig. 8 processes the luminance prediction residual block, the processing units perform similar processing on the chrominance prediction residual block. In other words, after the motion prediction unit 802 calculates a chrominance prediction block based on a motion vector determined by the motion vector search unit 801, processing similar to the one performed for the luminance prediction residual block will be performed. Then, the entropy coding and multiplexing unit 122 multiplexes the orthogonal transform coefficient subjected to the entropy coding and header information subjected to the entropy coding regarding the luminance component and the chrominance components, and outputs the multiplexed data to the outside of the image coding apparatus as an encoded stream.

According to the present embodiment, the algorithm of the intra prediction of the present invention can be easily implemented in an image coding apparatus using both the intra coding and inter coding.

The present invention is not dependent on a particular motion vector search algorithm and any motion vector search algorithm which is generally used can be used in the present invention.

According to the present embodiment, although the motion prediction unit 802 calculates an evaluation value of the motion vector determined by the motion vector search unit 801, the present invention is not limited to such an example. For example, the motion vector search unit 801 can store an evaluation value of each candidate motion vector calculated for the search of a motion vector used in the prediction, in a memory (not illustrated) within the motion vector search unit 801. Then, the motion prediction unit 802 can read out an evaluation value corresponding to the motion vector determined by the motion vector search unit 801 from the evaluation values stored in the motion vector search unit 801.

Regarding the image coding apparatus according to the present embodiment, the motion vector determined by the motion vector search unit 801 is input to the entropy coding and multiplexing unit 122 via the motion prediction unit 802. However, the input method of the motion vector of the present invention is not limited to such an example. In other words, the image coding apparatus according to the present invention can directly input the motion vector determined by the motion vector search unit 801 to the entropy coding and multiplexing unit 122.

Further, according to the present embodiment, the overall control unit 830 determines the prediction method (intra coding or inter coding) and the selection unit 803 transmits the prediction residual block based on the prediction method determined by the overall control unit 830. However, the determination of the prediction method of the present invention is not limited to such an example. In other words, according to the present invention, the selection unit 803 can determine the prediction method.

Next, a fourth embodiment will be described. According to the first, the second, and the third embodiments described above, each processing unit illustrated in Figs. 1, 3, 7, and 8 operates as hardware. However, the processing performed by each processing unit can be executed by a computer program.

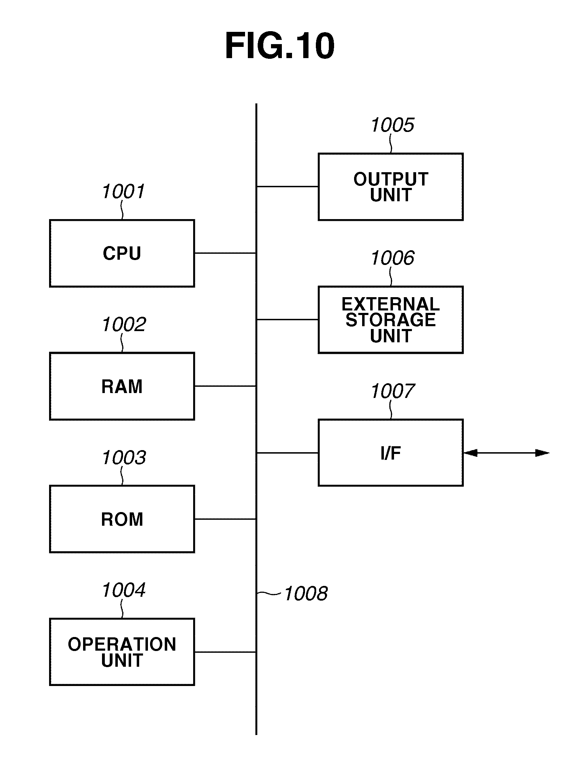

Fig. 10 illustrates an example of a block diagram of a hardware configuration of a computer which executes the processing performed by each processing unit of the image coding apparatus according to the first, the second, and the third embodiments described above.

A central processing unit (CPU) 1001 controls the entire computer according to a computer program or data stored in a random access memory (RAM) 1002 or a read-only memory (ROM) 1003 and executes each processing performed by the image coding apparatus according to the above-described embodiments. In other words, the CPU 1001 functions as each processing unit illustrated in Figs. 1, 3, 7, and 8.

The RAM 1002 includes an area used for temporarily storing a computer program and data loaded from an external storage unit 1006 as well as data obtained from an external device via an interface (I/F) 1007. Further, the RAM 1002 includes a work area which is used when the CPU 1001 executes various types of processing. In other words, the RAM 1002 can function as a frame memory and provides various areas as appropriate. The ROM 1003 stores setting data of the computer and a boot program.

An operation unit 1004 includes, for example, a keyboard or a mouse. When a user of the computer operates the operation unit 1004, various instructions can be input in the CPU 1001. A display unit 1005 displays a result of the processing performed by the CPU 1001. The display unit 1005 includes, for example, a liquid crystal display.

The external storage unit 1006 is a large capacity information storage device such as a hard disk drive. An operating system (OS) and a computer program which can cause the CPU 1001 to realize the function of each unit illustrated in Figs. 1, 3, 7, and 8 are stored in the external storage unit 1006. Further, each image as a processing object can be stored in the external storage unit 1006. The computer program and data stored in the external storage unit 1006 is loaded into the RAM 1002 as appropriate according to the control of the CPU 1001 and processed by the CPU 1001.

The I/F 1007 can connect the computer to an apparatus such as a projection apparatus or a display apparatus via a network such as a local area network (LAN) or the Internet. The computer can receive and transmit various types of information via the I/F 1007. A bus 1008 connects each of the above-described units.

The operations performed by the units described above are controlled by the CPU 1001 playing a central role in controlling the operations described in the above-described flowchart.

Other Embodiments

According to the embodiments described above, the luminance intra prediction mode is determined in consideration of the coding efficiency of the chrominance components by weighting the evaluation value corresponding to the luminance component and the chrominance components in the intra prediction mode and summing up the obtained results. However, the determination method of the luminance intra prediction mode of the present invention is not limited to such an example. In other words, any determination method can be used so long as it is a method that determines the luminance intra prediction mode in consideration of the coding efficiency of the chrominance component. For example, a method can be used that determines the luminance intra prediction mode by using attribute information calculated from a pixel of a luminance component and a chrominance component of an image which has been input to the image coding apparatus. For example, the luminance intra prediction mode can be determined by calculating an edge of a luminance component and chrominance components of an input image, and further calculating the gradation direction. Then the luminance intra prediction mode can be determined based on the gradation direction.

Embodiments of the present invention can also be realized by a computer of a system or apparatus that reads out and executes computer executable instructions recorded on a storage medium (e.g., non-transitory computer-readable storage medium) to perform the functions of one or more of the above-described embodiment (s) of the present invention, and by a method performed by the computer of the system or apparatus by, for example, reading out and executing the computer executable instructions from the storage medium to perform the functions of one or more of the above-described embodiment (s). The computer may comprise one or more of a central processing unit (CPU), micro processing unit (MPU), or other circuitry, and may include a network of separate computers or separate computer processors. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to embodiments, it is to be understood that the invention is not limited to the disclosed embodiments. Embodiments of the invention are set out in the following statements. The claims follow and are labelled as such.

Statement 1. An image coding apparatus comprising:

an acquisition means configured to acquire a plurality of first values indicating an evaluation of each of a plurality of chrominance prediction modes which can be selected in coding of a chrominance component of a block to be coded and a plurality of second values indicating an evaluation of each of a plurality of luminance prediction modes which can be selected in coding of a luminance component of the block to be coded, and

a determination means (306) configured to determine a luminance prediction mode to be used for the coding of the luminance component out of the plurality of luminance prediction modes based on the plurality of first values and the plurality of second values acquired by the acquisition means.

Statement 2. The image coding apparatus according to statement 1, wherein the plurality of first values is associated with a coding amount calculated by coding of the chrominance component of the block to be coded using the plurality of chrominance prediction modes.

Statement 3. The image coding apparatus according to statement 1, wherein the plurality of second values is associated with a coding amount calculated by coding of the luminance component of the block to be coded using the plurality of luminance prediction modes.

Statement 4. The image coding apparatus according to statement 1, wherein the determination means (306) determines a luminance prediction mode to be used for the coding of the luminance component out of the plurality of luminance prediction modes based on a third value obtained by multiplying each of the plurality of first values acquired by the acquisition means by a first weight, and a fourth value obtained by multiplying each of the plurality of second values acquired by the acquisition means by a second weight.

Statement 5. The image coding apparatus according to statement 4, wherein the first weight is determined based on a quantization parameter in the coding of the chrominance component of the block to be coded, wherein the second weight is determined based on a quantization parameter in the coding of the luminance component of the block to be coded.

Statement 6. The image coding apparatus according to statement 4, wherein the first weight is determined based on a sample number of the chrominance component of the block to be coded; and
wherein the second weight is determined based on a sample number of the luminance component of the block to be coded.

Statement 7. The image coding apparatus according to statement 1, wherein the determination means (306) determines the chrominance prediction mode to be used for the coding of the chrominance component of the block to be coded out of the plurality of chrominance prediction modes based on the luminance prediction mode determined by the determination means (306) and the first value acquired by the acquisition means.

Statement 8. The image coding apparatus according to statement 1, wherein the acquisition means acquires a first value indicating an evaluation value of a predetermined mode out of the plurality of chrominance prediction modes and a plurality of second values indicating the evaluation of each of the plurality of luminance prediction modes, and wherein if a value equal to a predetermined value or less than the predetermined value exists among the first values, the determination means (306) determines the luminance prediction mode to be used for the coding of the luminance component out of the plurality of luminance prediction modes based on the plurality of second values acquired by the acquisition means.

Statement 9. The image coding apparatus according to statement 8, wherein the predetermined mode is a mode which can be used for the coding of the chrominance component of the block to be coded even if the luminance prediction mode to be used for the coding of the luminance component of the block to be coded is any of the plurality of luminance prediction modes.

Statement 10. The image coding apparatus according to statement 8, wherein the predetermined mode is at least one of a horizontal mode, a vertical mode, a DC mode, and a planar mode.

Statement 11. An image coding method comprising:

acquiring a plurality of first values indicating an evaluation of each of a plurality of prediction modes which can be selected in coding of a chrominance component of a block to be coded and a plurality of second values indicating an evaluation of each of a plurality of modes which can be selected in coding of a luminance component of the block to be coded, and
determining a luminance prediction mode to be used for the coding of the luminance component out of the plurality of luminance prediction modes, based on the acquired plurality of first values and the plurality of second values.

Statement 12. The image coding method according to statement 11, wherein determining the luminance prediction mode is determining the luminance prediction mode to be used for the coding of the luminance component out of the plurality of luminance prediction modes based on a third value obtained by multiplying each of the acquired plurality of first values by a first weight and a fourth value obtained by multiplying each of the acquired plurality of second values acquired by a second weight.

Statement 13. A non-transitory computer-readable storage medium storing a program for causing a computer to execute image coding, the program comprising:

computer-executable instructions to acquire a plurality of first values indicating an evaluation of each of a plurality of chrominance prediction modes which can be selected in coding of a chrominance component of a block to be coded and a plurality of second values indicating an evaluation of each of a plurality of luminance prediction modes which can be selected in coding of a luminance component of the block to be coded, and
computer-executable instructions to determine a luminance prediction mode to be used for the coding of the luminance component out of the plurality of luminance prediction modes, based on the plurality of first values and the plurality of second values acquired by the acquisition means.

**Claims**

1. An image coding apparatus comprising:

   acquisition means for acquiring a plurality of first values indicating an evaluation of each of a plurality of chrominance prediction modes which can be selected in coding of a chrominance component of a block to be coded and a plurality of second values indicating an evaluation of each of a plurality of luminance prediction modes which can be selected in coding of a luminance component of the block to be coded, and
   determination means (306) for determining a luminance prediction mode to be used for the coding of the luminance component out of the plurality of luminance prediction modes based on the plurality of first values and the plurality of second values acquired by the acquisition means.

2. The image coding apparatus according to claim 1,
   wherein each of the plurality of first values is associated with a coding amount calculated by coding of the chrominance component of the block to be coded using a respective one of the plurality of chrominance prediction modes.

3. The image coding apparatus according to claim 1,
   wherein each of the plurality of second values is associated with a coding amount calculated by coding of the luminance component of the block to be coded using a respective one of the plurality of luminance prediction modes.

4. The image coding apparatus according to claim 1,
   wherein the determination means (306) is arranged to determine a luminance prediction mode to be used for the coding of the luminance component out of the plurality of luminance prediction modes based on a third value obtained by multiplying each of the plurality of first values acquired by the acquisition means by a first weight, and a fourth value obtained by multiplying each of the plurality of second values acquired by the acquisition means by a second weight.

5. The image coding apparatus according to claim 4,
   wherein the first weight is determined based on a quantization parameter in the coding of the chrominance component of the block to be coded, and the second weight is determined based on a quantization parameter in the coding of the luminance component of the block to be coded.

6. The image coding apparatus according to claim 4,
   wherein the first weight is determined based on a sample number of the chrominance component of the block to be coded, and the second weight is determined based on a sample number of the luminance component of the block to be coded.

7. The image coding apparatus according to claim 1,
   wherein the determination means (306) is arranged to determine the chrominance prediction mode to be used for the coding of the chrominance component of the block to be coded out of the plurality of chrominance prediction modes based on the luminance prediction mode determined by the determination means (306) and the first value acquired by the acquisition means.

8. The image coding apparatus according to claim 1,
   wherein the acquisition means is arranged to acquire a first value indicating an evaluation value of a predetermined mode out of the plurality of chrominance prediction modes and a plurality of second values indicating the evaluation of each of the plurality of luminance prediction modes, and
   the determination means (306) is arranged to, if a value equal to a predetermined value or less than the predetermined value exists among the first values, determine the luminance prediction mode to be used for the coding of the luminance component out of the plurality of luminance prediction modes based on the plurality of second values acquired by the acquisition means.

9. The image coding apparatus according to claim 8,
wherein the predetermined mode is a mode which can be used for the coding of the chrominance component of the block to be coded even if the luminance prediction mode to be used for the coding of the luminance component of the block to be coded is any of the plurality of luminance prediction modes.

10. The image coding apparatus according to claim 8,
wherein the predetermined mode is at least one of a horizontal mode, a vertical mode, a DC mode, and a planar mode.

11. An image coding method comprising:

acquiring a plurality of first values indicating an evaluation of each of a plurality of prediction modes which can be selected in coding of a chrominance component of a block to be coded and a plurality of second values indicating an evaluation of each of a plurality of modes which can be selected in coding of a luminance component of the block to be coded, and
determining a luminance prediction mode to be used for the coding of the luminance component out of the plurality of luminance prediction modes, based on the acquired plurality of first values and the plurality of second values.

12. The image coding method according to claim 11, wherein determining the luminance prediction mode comprises determining the luminance prediction mode to be used for the coding of the luminance component out of the plurality of luminance prediction modes based on a third value obtained by multiplying each of the acquired plurality of first values by a first weight and a fourth value obtained by multiplying each of the acquired plurality of second values acquired by a second weight.

13. A computer program for causing a computer to execute a method according to claim 11 or claim 12.

# FIG.1

# FIG.2A

ADJACENT
CODING
BLOCK A

P[0, 1]  PREDICTION
BLOCK 1

P[-1, -1]

P[-1, 0]

ADJACENT
CODING
BLOCK B

P[31, -1]

P[63, -1]

PREDICTION
BLOCK 2

PREDICTION
BLOCK 4

P[-1, 31]

PREDICTION
BLOCK 3

CURRENT BLOCK
TO BE CODED

# FIG.2B

PREDICTION   PREDICTION
BLOCK 1       BLOCK 2

r[15, 0]      r[31, 0]

r[0, 15]

r[0, 31]                      r[31, 31]

PREDICTION   PREDICTION
BLOCK 3       BLOCK 4

# FIG.2C

r[15, 0]

PREDICTION
BLOCK 1

r[15, 14]

r[15, 15]

r[0, 15]                      r[14, 15]

# FIG.3

EP 2 739 058 A2

# FIG.4

START

S401
SET INITIAL VALUE TO
Wy[i], Wcb[i], and Wcr[i]

S402
SET Thc

S403
CALCULATE ISy[i], IScb[i],
IScr[i], AND IStotal[i]
FOR PREDETERMINED
MODES (#0 TO #3)

S404
MIN
(IScb[i]+IScr[i])
≤ ThC?

YES →

NO ↓

S408
CALCULATE ISy[i], IScb[i],
IScr[i], AND IStotal[i]
FOR MODES #4 TO #34 OTHER
THAN PREDETERMINED MODES

S409
DETERMINE LUMINANCE
INTRA PREDICTION MODE
AND CHROMINANCE
INTRA PREDICTION MODE

S405
DETERMINE
CHROMINANCE INTRA
PREDICTION MODE

S406
CALCULATE ISy[i] FOR
MODES #4 TO #34 OTHER THAN
PREDETERMINED MODES

S407
DETERMINE LUMINANCE
INTRA PREDICTION MODE

END

# FIG.5

EP 2 739 058 A2

## FIG.6A

| Intra Prediction Mode | ISy[i] | IScb[i] | IScr[i] | IStotal[i] |
|---|---|---|---|---|
| Intra_Planar (Mode 0, Planar mode) | 5120 | 1020 | 1110 | 7250 |
| Intra_DC (Mode 1, DC mode) | 4890 | 830 | 950 | 6670 |
| Angular_10 (Mode 10, Horizontal mode) | 3750 | 1250 | 1340 | 6340 |
| Angular_26 (Mode 26, Vertical mode) | 5290 | 830 | 950 | 7070 |
| Angular_2 (Mode 2) | 4124 | 1020 | 1110 | 6254 |
| Angular_18 (Mode 18) | 3832 | 650 | 710 | 5192 |
| Angular_34 (Mode 34) | 5600 | 1400 | 930 | 7930 |

## FIG.6B

| Intra Prediction Mode | ISy[i] | IScb[i] | IScr[i] | IStotal[i] (Before Weighting) |
|---|---|---|---|---|
| Intra_Planar (Mode 0, Planar mode) | 5120 | 1020 | 1110 | 7250 |
| Intra_DC (Mode 1, DC mode) | 4890 | 830 | 950 | 6670 |
| Angular_10 (Mode 10, Horizontal mode) | 3750 | 1250 | 1340 | 6340 |
| Angular_26 (Mode 26, Vertical mode) | 5290 | 320 | 640 | 6250 |
| Angular_2 (Mode 2) | 4124 | 1020 | 1110 | 6254 |
| Angular_18 (Mode 18) | 3832 | 650 | 710 | 5192 |
| Angular_34 (Mode 34) | 5600 | 1400 | 930 | 7930 |

EP 2 739 058 A2

# FIG.7

# FIG.8

EP 2 739 058 A2

# FIG.9

0: Intra_Planar
1: Intra_DC

# FIG.10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010251952 A